## Europäisches Patentamt

## European Patent Office

## Office européen des brevets

(19)

(11) Veröffentlichungsnummer: **0 121 236
B1**

(12) # EUROPÄISCHE PATENTSCHRIFT

(45) Veröffentlichungstag der Patentschrift:
24.06.87

(21) Anmeldenummer: **84103442.4**

(22) Anmeldetag: **28.03.84**

(51) Int. Cl.⁴: **H 04 Q 11/04,** H 04 M 3/36, H 04 Q 3/54

(54) **Schaltungsanordnung für Fernmeldeanlagen, insbesondere Fernsprechvermittlungsanlagen mit informationsverarbeitenden Schaltwerken und Einrichtungen zur Abwehr von Überbelastungen.**

(30) Priorität: **31.03.83 DE 3311912**

(43) Veröffentlichungstag der Anmeldung:
**10.10.84 Patentblatt 84/41**

(45) Bekanntmachung des Hinweises auf die Patenterteilung:
**24.06.87 Patentblatt 87/26**

(84) Benannte Vertragsstaaten:
**AT CH DE FR GB LI NL SE**

(73) Patentinhaber: **Siemens Aktiengesellschaft Berlin und München, Wittelsbacherplatz 2, D-8000 München 2 (DE)**

(72) Erfinder: **Daisenberger, Georg, Dipl.-Ing., Kärtner-Platz 3, D-8000 München 21 (DE)**

(56) Entgegenhaltungen:
DE - A - 3 236 130
FR - A - 2 402 904
GB - A - 2 001 227

9TH INTERNATIONAL TELETRAFFIC CONGRESS (I.T.C.), Oktober 1979, Seiten 1-7, Torremolinos, ES; P. SOMOZA et al.: "Dynamic processor overload control and its implementation in certain single-processor and multiprocessor SPC systems"
TELCOM REPORT, Band 4, Nr. 3, Juni 1981, Seiten 222-232, Passau, DE; G. DAISENBERGER et al.: "Verkehrsmessung und -überwachung, ein Hilfsmittel für Planung und Betrieb von Fernsprech-Vermittlungsstellen und - netzen"
PATENTS ABSTRACTS OF JAPAN, Band 6, Nr. 132 (E-119)(1010), 17. Juli 1982

(56) Entgegenhaltungen: (Fortsetzung)
FOURTH INTERNATIONAL CONFERENCE ON SOFTWARE ENGINEERING FOR TELECOMMUNICATION SWITCHING SYSTEMS, 20.-24. Juli 1981, Seiten 167-171; C. HARVEY et al.: "Controlling overloads in multiprocessor systems"
ANNALES DES TELECOMMUNICATIONS, Band 32, Nr. 9-10, 1977, Seiten 303-314, Issy-les-Moulineux, FR; L. ROMOEUF: "Modèle de régulation de charge dans un autocommutateur téléphonique a commande centralisée"
GRINSEC: "Electronic switching", Elsevier, Amsterdam, NL, 1983, ein Ubersetzung von "La commutation Electronique", 1981, Paris, FR, Teil IV, "Call Processing", Kapitel 1, Absatz 8, "Traffic supervision and load control", Seiten 411-415

## Beschreibung

Die Erfindung bezieht sich auf eine Schaltungsanordnung für Fernmeldeanlagen, insbesondere Fernsprechvermittlungsanlagen, mit zentralen und/oder teilzentralen informationsverarbeitenden Schaltwerken mit einer hinsichtlich der Informations-Verarbeitungskapazität begrenzten Leistungsfähigkeit, und mit Messeinrichtungen zur Bestimmung der Belastbarkeit solcher Schaltwerke, die die stets schwankende Belastung über Zeiträume integrieren, die jeweils gross genug sind, um ein Bestimmungsergebnis mit ausreichender Ergebnisgenauigkeit zu gewährleisten, und mit Zählern zur Ermittlung der Informationsverarbeitungs-Verkehrsbelastung jeweils eines Schaltwerkes, zur Erkennung von Informationsverarbeitungs-Verkehrsüberlastungen und zur Abwehr solcher Überlastungen, wobei diese Zähler mit möglichst geringem Zeitverzug einen jeweils aktuellen Momentanwert der Informations-Verkehrsbelastung liefert, um die Abwehr von Überlastungen verzögerungsarm zu realisieren. Ähnliches beschreiben mit gleicher Priorität und gleichem Anmeldetag die EP-A 84 103 444, EP-A 84 103 445, EP-A 84 103 446 und EP-A 84 103 447.

Eine Schaltungsanordnung dieser Art ist bereits durch einen Vortrag bekanntgeworden, der auf dem «9th International Teletraffic Congress (ITC)» im Okt. 1979 in Torremolinos/Spanien (Konferenzpapier ITC-9 von Somoza/Guerrero 1–7) gehalten wurde. In dadurch bekannt gewordenen Anordnungen wird also unterschieden zwischen einer Belastbarkeitsmessung einerseits, die ein die Belastbarkeit eines zentralen Schaltwerkes betreffendes Bestimmungsergebnis liefert, und einer Informationsverarbeitungs-Verkehrsbelastungsermittlung andererseits, die den jeweils aktuellen Stand der Belastungssituation angibt. Während das Bestimmungsergebnis Kurzzeitschwankungen in der Belastung nivelliert, soll das Ergebnis der laufenden Informationsverarbeitungs-Verkehrsbelastungsermittlung möglichst aktuell sein, also jeweils ein Ergebnis liefern, in welchem die laufenden Belastungsschwankungen zum Ausdruck kommen. Das genannte Bestimmungsergebnis der Belastbarkeitsmessung gibt eine Messgrösse an, mit der das laufend ermittelte aktuelle Ergebnis der Informationsverarbeitungs-Verkehrsbelastung verglichen wird. Das Ergebnis der Belastbarkeitsmessung ist ein Richtwert, also ein Soll-Wert, dafür, welche Verkehrsbelastung einem zentralen Steuerwerk zugeführt werden soll. Das Ergebnis der Informationsverarbeitungs-Verkehrsbelastung ist der jeweils aktuelle Ist-Wert der tatsächlich in jedem Augenblick vorliegenden Verkehrsbelastung. Ein Vergleich dieses Ist-Wertes mit dem Soll-Wert gibt jeweils einen Hinweis dafür, ob die dem zentralen Steuerwerk zuzuführende Verkehrsbelastung gegenüber dem momentanen Wert erhöht werden kann oder erniedrigt werden muss.

In diesem bekannten Falle erfolgt die Belastbarkeitsmessung zur Gewinnung des erwähnten Soll-Wertes durch eine Zählung von an ein Schaltwerk herangetragenen Aufträgen über relativ grosse Zeitspannen von je mehreren Sekunden, während die Belastungsmessung zur Ermittlung der laufenden Ist-Werte ebenfalls durch Zählung, aber in viel kleineren Zeitintervallen erfolgt, wobei jedes dieser Zeitintervalle nur ein kleiner Bruchteil jeder der Zeitspannen ist. – Übersteigt diese Zahl innerhalb eines Zeitintervalles einen dem Soll-Wert entsprechenden und durch ihn bestimmten Grenzwert, so werden alle weiteren Aufträge bis zum Ende des Zeitintervalles abgewiesen. Dadurch wird die Belastung eines Schaltwerkes mit auszuführenden einzelnen Aufträgen (Rechenoperationen, Steuerungsvorgänge u.dgl.) geregelt. Dabei ist es erforderlich, die Dauer jedes der Zeitintervalle gross genug zu machen, damit eine Belastungsregelung nicht in groben Sprüngen, sondern fein genug erfolgt. – Anhand der durch Zählung erfassten Belastungsergebnisse kann die Zahl der Aufträge und damit der Zustrom von im Rechner zu verarbeitenden Informationen eingeschränkt oder vorübergehend ganz gestoppt werden. Dadurch soll die Verkehrsbelastung optimal an Leistungsfähigkeit und Überlastgrenzen des Rechners angepasst werden, um sowohl eine möglichst hohe Ausnutzung der Rechnerkapazität zu erzielen, als auch Überbelastungen soweit wie möglich zu vermeiden, die bekanntlich erhebliche vorübergehende Betriebseinschränkungen oder Betriebsstörungen für die den Rechner in Anspruch nehmenden Einrichtungen zur Folge haben können. Dies wird in den durch den Vortrag angesprochenen Anwendungsfällen also durch eine dynamische Anpassung der Verkehrsbelastung an die nach wechselnder Art und darin nach Häufigkeit der dem Rechner zugeführten Rechenaufträge verbessert.

Die bekannten Methoden zur Erkennung und Regelung der Rechnerbelastung liefern aber nur ein ausreichend genaues Ergebnis, wenn der einzelne Zeitraum, der für die Zählung der betreffenden Ereignisse, z.B. Rechneranforderungen, verwendet wird, in Bezug auf den mittleren zeitlichen Abstand zwischen diesen Ereignissen gross genug ist, so dass durch Schwankungen der Rechnerbelastung, die kontinuierlich steigt und fällt, diese Rechnerbelastung nicht in groben Sprüngen dargestellt wird, damit eine entsprechende Regelung die Rechnerbelastung optimal an die Belastbarkeit anzupassen vermag. Die darin liegende Forderung, dass der Zeitraum für die einzelne Zählung der Ereignisse gross genug sein muss, wirkt sich negativ auf den jeweiligen Zeitpunkt der Verfügbarkeit der Ergebnisse jedes der Zählvorgänge aus. Das Ergebnis der Ermittlung der Rechnerbelastung weist also immer einen Zeitverzug auf, der zwangsläufig dadurch bedingt ist, dass für einen jeden Erfassungszeitraum das ihm entsprechende Ergebnis erst nach seinem Ablauf ermittelt wird, und zwar durch einen Vergleichsvorgang. Dieser Zeitverzug ist wiederum nachteilig für eine Einflussnahme auf die Rechnerbelastung zu deren Regelung. Denn entweder kann eine Überlastabwehr erst zum Tragen kommen, wenn die Überlastsituation bereits eingetreten ist, also im Hinblick auf tatsächlich erwachsende Überbelastungen zu spät, oder die Überlastabwehr muss bereits einsetzen, bevor die Belastungsgrenze des Rechners überhaupt erreicht ist, d.h. «auf Verdacht», also nicht nur in denjenigen Betriebsfällen, in denen die Rechnerbelastung tatsächlich über die Belastbarkeitsgrenze ansteigt, sondern darüber hinaus auch in allen denjenigen Betriebsfällen, in denen der Anstieg der Rechnerbelastung in Richtung auf die Belastbarkeitsgrenze nur die Annahme veranlasst, dass die Belastbarkeitsgrenze überschritten werden wird, in denen tatsächlich aber die Rechnerbelastung die Belastbarkeitsgrenze nicht erreicht oder überschreitet. Das Problem liegt also in der Extrapolation des Belastungsverhaltens über die Zeit. – Eine Regelung ist nun desto weniger wirksam, je später sie einsetzt; ihr relativ spätes Einsetzen kann darüber hinaus zur Folge haben, dass Perioden stärkerer Unterbelastung mit Perioden von Überbelastung sich kontinuierlich abwechseln, ohne dass dies durch die tatsächlich anfallende Verkehrsbelastung wirklich bedingt wäre. Die genannte Forderung verschärft sich noch unter der Bedingung, dass die zeitliche Verteilung der zu erfassenden Ereignisse stärker streut, dass also die zeitlichen Abstände zwischen den jeweils aufeinanderfolgenden Ereignissen untereinander relativ ungleich sind. Dieser Effekt ist desto gravierender, je kleiner der jeweilige Erfassungsbereich ist; je grösser er nämlich ist, desto mehr kommt die ausgleichende Wirkung der statistischen Verteilung zum Tragen – Die Grösse der oben erwähnten Zeitintervalle hat also auch einen verzögernden Einfluss auf das jeweilige Einsetzen des Regelungseffektes und damit auf die Wirksamkeit der Regelung. Diese Dauer jedes der Zeitintervalle muss desto grösser gewählt werden, je kleiner die Anzahl der pro Zeiteinheit anfallenden Aufträge ist. Diese Dauer ist also z.B. bei Teilsteuerwerken grösser, die einem zentralen Steuerwerk zugeordnet sind, als bei dem zentralen Steuerwerk selbst, wenn man davon ausgeht, dass die Anzahl der Aufträge pro Zeiteinheit beim zentralen Steuerwerk grösser als bei den Teilsteuerwerken ist.

Für die Erfindung besteht die Aufgabe, eine für Schaltwerke jeglicher Art geeignete Anordnung zur Belastungsregelung anzugeben, die auch bei geringen Anzahlen von Aufträgen pro Zeiteinheit ein schnelles Einsetzen der Regelungswirkung ermöglicht.

Die Erfindung löst die gestellte Aufgabe dadurch, dass von den von einer Messeinrichtung laufend abgegebenen und wenigstens einem Zähler zugeführten Bestimmungsergebnissen jeweils das letzte in einem Speicher des betreffenden Zählers gespeichert ist, der bei Eintreffen jeweils eines ein nachfolgendes Eintreffen einer zu verarbeitenden Information ankündigenden Initial-Schaltkennzeichens vorwärtsgeschaltet und in regelmässigen Zeitabständen rückwärtsgeschaltet wird, und dass das jeweils gespeicherte Bestimmungsergebnis angibt, um wieviele Schritte der Zähler bei Erhalt eines jeden Initial-Schaltkennzeichens vorwärtsgeschaltet wird, und dass in dem Zähler von einer Überschreitung eines Grenzwertes durch Vorwärtszähler bis zum Wiedererreichen des Grenzwertes durch Rückwärtszählung ein Überlastkriterium besteht.

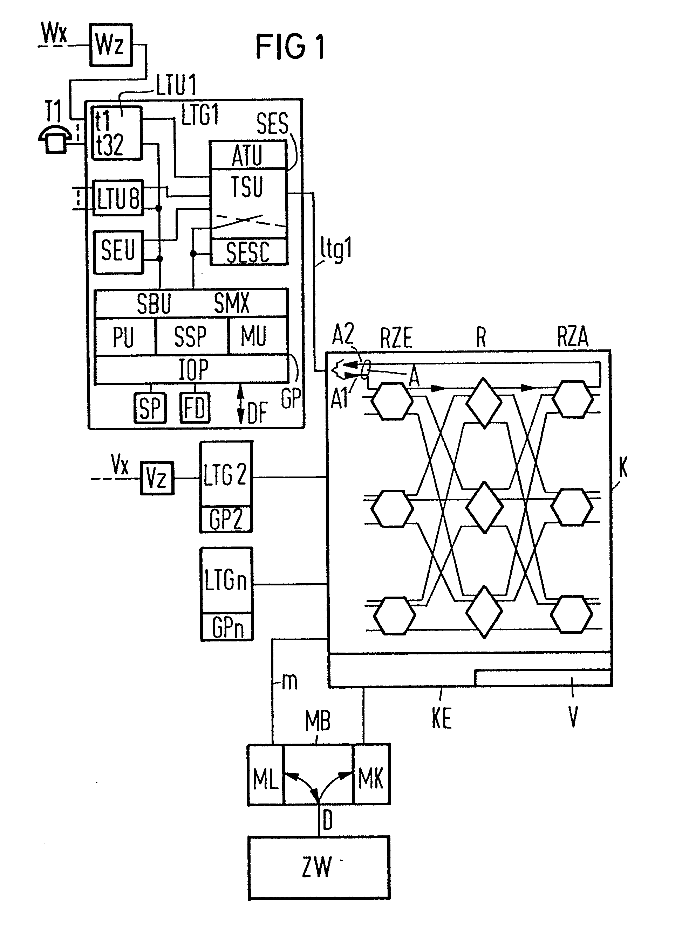

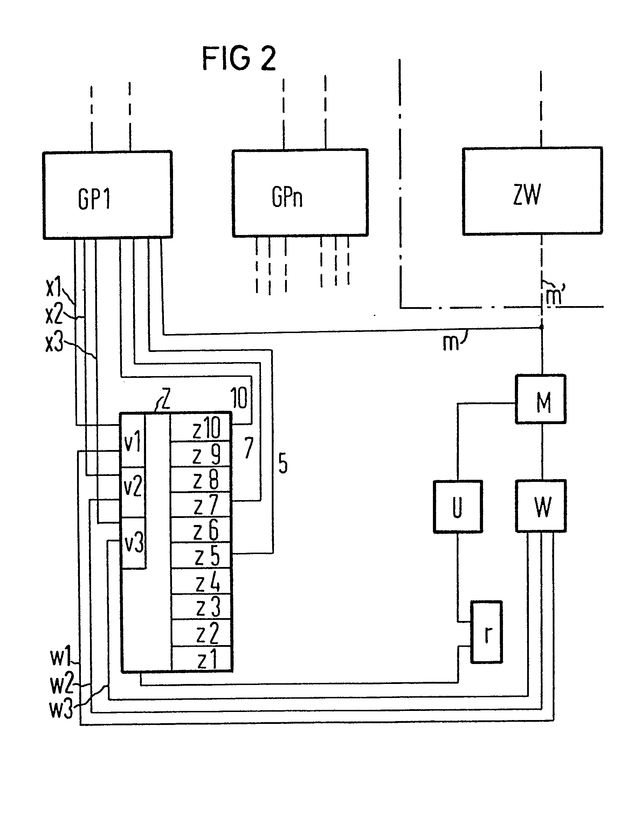

In Fig. 1 und 2 der Zeichnungen ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäss arbeitenden PCM-Fernsprechvermittlungsanlage nach Fig. 1 ein. Erst weiter unten werden die erfindungsgemässen Besonderheiten dieser Vermittlungsanlage zusätzlich anhand von Fig. 2 erläutert.

Ein in drei Koppelstufen RZE, R und RZA aufgebautes Koppelfeld weist eingangsseitig eine grössere Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfasst immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfasst der Koppelfeldanschluss A eine Zeitmultiplexleitung A1 und eine Zeitmultiplexleitung A2. Für jede dieser beiden Zeitmultiplexleitungen ist die jeweilige Signalübertragungsrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine grössere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, z.B. A des Koppelfeldteiles K, sind über für jeweils beide Nachrichtenübertragungsrichtungen ausgelegte Zeitmultiplexleitungen, z.B. die Zeitmultiplexleitung ltg1, Anschlussgruppen, z.B. die Anschlussgruppe LTG1 (Line Trunk Group), einzeln angeschlossen. Eine solche Anschlussgruppe ist eingangsseitig mit Teilnehmerleitungen (analog), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlussgruppe sind Codierer, Decodierer, Multiplexer, Demultiplexer und die für eine Realisierung der sogenannten BORSCHT-Funktionen erforderlichen Einrichtungen enthalten (vgl. NTZ Bd. 33/1980, Heft 10, Seiten 646 bis 652 und 1978 International Zurich Seminar on Digital Communications, Proceedings IEEE Catalogue, Nr. 78 CH 1325-0 ASST, Seiten B2-1, A4.1, auch die DE-A 3 100 811; 3 104 002 und 3 106 903).

In der Zeichnung ist unter anderem die Anschlussgruppe LTG1 gezeigt. Deren Aufbau und Arbeitsweise sind ausführlich in der DE-A 2 826 113 ab Seite 6 unten beschrieben. Ferner sei auf das Beiheft zum 4. Jahrgang (1981) der Zeitschrift «telcom report» hingewiesen. Die weiteren Erläuterungen setzen diese Beschreibungen als bekannt voraus und beschränken sich auf die im vorliegenden Falle besonders wesentlichen Zusammenhänge.

Ein zentrales Steuerwerk ZW dient unter anderem zur Herstellung der über das Koppelfeld aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenen Koppelvielfache und Zwischenleitungen, sowie die darin jeweils belegten Kanäle. Diese Vermittlungsdaten werden mit Hilfe des Zentralsteuerwerkes, das also u.a. auch die Funktion einer Wegesucheinrichtung nebst Belegungsspeicher ausübt, erarbeitet und zur Koppelfeldeinstelleinrichtung KE des Koppelfeldes K übertragen. Der die Vermittlungsdaten übertragende Datenfluss vom Zentralsteuerwerk ZW zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist z.B. in der DE-PS 1 537 849 ausführlich beschrieben.

Ausser dem zentralen Steuerwerk ZW ist eine grössere Anzahl von dezentralen Steuereinrichtungen GP1 bis GPn dargestellt, die jeweils den Anschlussgruppen LTG1 bis LTGn individuell zugeordnet sind. Diese Steuereinrichtungen dienen zur Durchführung sämtlicher Schaltvorgänge innerhalb jeder der genannten Anschlussgruppen. Zu diesen Schaltvorgängen gehören insbesondere sämtliche Vermittlungsvorgänge innerhalb dieser Anschlussgruppen. Weitere Einzelheiten hierüber können der bereits angegebenen DE-OS 2 826 113 entnommen werden.

Die dezentralen Steuereinrichtungen GP1 bis GPn stehen mit dem zentralen Steuerwerk ZW über Datenkanäle in Verbindung, die einzeln pro dezentrale Steuereinrichtung über das Koppelfeld (K) bis zur Puffereinrichtung MB durchgeschaltet sind. Von dieser Puffereinrichtung, und zwar von ihrem Datenkopf ML, führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlussgruppen LTG1 bis LTGn. Die Zeitmultiplexleitung m ist also an einen Koppelfeldanschluss angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfasst. Die Zeitmultiplexeinrichtung m ist also an einen Koppelfeldanschluss wie den mit A bezeichneten angeschaltet.

Jede Datenverbindung zwischen dem Datenkopf einer Puffereinrichtung und einer jeden der Anschlussgruppen, z.B. der Anschlussgruppe LTG1, umfasst einen Kanal zur Übertragung von Daten von der Puffereinrichtung zur betreffenden Anschlussgruppe und einen weiteren Kanal zur Übertragung von Daten in der umgekehrten Richtung. Diese beiden Datenkanäle führen zu und von der der betreffenden Anschlussgruppe individuell zugeordneten dezentralen Steuereinrichtung.

Die Herstellung und die Aufrechterhaltung der erläuterten Datenverbindungen über das Koppelfeld K erfolgt mit Hilfe der Koppelfeldeinstelleinrichtung KE in der gleichen Weise wie die Herstellung und die Aufrechterhaltung von Nachrichtenverbindungen, z.B. Fernsprechverbindungen. Hierzu sind in an sich bekannter Weise den Koppelvielfachen des Koppelfeldes K Haltespeicher zugeordnet, in die die jeweils ein Koppelvielfach betreffenden Vermittlungsdaten eingespeichert werden. Mit Hilfe dieser Haltespeicher wird bewerkstelligt, dass in den jeweiligen Zeitlagen die erforderlichen Durchschaltungen zur Verfügung stehen bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u.a. ein Datenkopf MK, der der Puffereinrichtung MB zugeordnet ist. Der Vollständigkeit halber sei an dieser Stelle hinzugefügt, dass mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines grösseren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung MB über die Zeitmultiplexleitung m zu jeder der Anschlussgruppen LTG1 bis LTGn mit Hilfe des Koppelfeldes K durchgeschaltet sein müssen, bevor der Aufbau von Nachrichtenverbindungen, z.B. Fernsprechverbindungen, begonnen werden kann, steht für die Herstellung dieser Datenverbindungen in der Regel ein völlig freies Koppelfeld zur Verfügung, also ein Koppelfeld, indem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, dass die Koppelfeldeinstelleinrichtung KE ausserdem in einem ihr zugeordneten Speicher V Einstelldaten, d.h. also die Vermittlungsdaten, für die Datenkanäle gespeichert enthält. Diese Vermittlungsdaten brauchen also bei einem Neuaufbau der Datenverbindungen nicht jeweils vom zentralen Steuerwerk ZW neu erarbeitet zu werden und nicht über die Puffereinrichtung MB erneut übertragen zu werden. Sind die zwischen der Puffereinrichtung MB und den Anschlussgruppen LTG1 bis LTGn, d.h. ihren dezentralen Steuereinrichtungen GP1 bis GPn, erforderlichen Datenverbindungen über das Koppelfeld K neu herzustellen, so gibt das zentrale Steuerwerk ZW lediglich einen entsprechenden Befehl an die Puffereinrichtung MB ab, den sie an die Koppelfeldeinstelleinrichtung KE weitergibt, und aufgrund deren diese die in ihrem Speicher V gespeicherten Vermittlungsdaten entnimmt, um in an sich bekannter Weise die erforderlichen Vermittlungsvorgänge einzeln nacheinander auszuführen.

Nachdem die bisherige Beschreibung die erfindungsgemäss gestaltete Zeitmultiplex-Fernsprechvermittlungsanlage in allgemeineren Zusammenhängen beschrieben hat, wendet sie sich nunmehr den erfindungsgemässen Zusammenhängen zu.

Wie in der bereits genannten DE-A 2 826 113 erläutert ist, werden über den Zeitkanalkoppler TSU der Anschlussgruppe LTG1 ausser Nachrichtenverbindungen von und zu Teilnehmerstellen sowie Verbindungsleitungen auch die bereits erwähnten Datenverbindungen zwischen den den Anschlussgruppen, z.B. LTG1, zugeordneten dezentralen Steuereinrichtungen, z.B. GP, einerseits und dem zentralen Steuerwerk ZW andererseits hergestellt. Diese Datenverbindungen verlaufen, wie bereits dargelegt, weiterhin über das Koppelfeld K und die Zeitmultiplexleitung m.

Wie bereits ausgeführt wurde, sind die Gruppensteuerwerke GP1 bis GPn dezentrale oder teilzentrale Steuereinrichtungen im Vergleich zum zentralen Steuerwerk ZW. Insgesamt werden diese teilzentralen Steuerwerke und das zentrale Steuerwerk auch als Schaltwerke bezeichnet. Die Gruppensteuerwerke und das zentrale Steuerwerk weisen eine hinsichtlich der Informationskapazität begrenzte Leistungsfähigkeit auf. Ein besonderes Problem stellt die Leistungsfähigkeit des zentralen Steuerwerkes dar.

Wie ebenfalls bereits angedeutet wurde, ist ausser dem zentralen Koppelfeld K eine Anzahl von Anschlussgruppen LTG1 bis LTGn vorgesehen. Jede dieser Anschlussgruppen ist je über eine PCM-Leitung, z.B. ltg1, an einen Eingang des Koppelfeldes K in der beschriebenen Weise angeschlossen. Diese PCM-Leitung pro Anschlussgruppe führt innerhalb derselben zu einer Durchschalteeinrichtung TSU, deren Bedeutung und Funktionsweise in der bereits genannten DE-A 2 826 113 genauer beschrieben wird. Bei dieser Durchschalteanordnung handelt es sich um ein Teilkoppelfeld, über das sowohl die genannten Datenverbindungen als auch die Verbindungen von und zu Teilnehmern und von und zu Verbindungsleitungen durchgeschaltet werden. Unter «Verbindungsleitungen» sind selbstverständlich auch Kanäle von angeschlossenen PCM-Verbindungsleitungen zu verstehen. Der Anschluss dieser Teilnehmerleitungen, Verbindungsleitungen und Kanäle ist den bereits genannten Literaturstellen zu entnehmen.

Über eingangsseitig an eine Anschlussgruppe angeschlossene Teilnehmerleitungen, Verbindungsleitungen und Kanäle treffen verschiedenerlei Informationen ein, z.B. Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Das Gruppensteuerwerk dient in an sich bekannter Weise zur Abwicklung der Aufnahme solcher eintreffender verbindungsindividueller Informationen. Ein Gruppensteuerwerk nimmt ausserdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Ausserdem werden einige solcher Informationen in den dem Gruppensteuerwerk jeweils individuell zugeordneten Speichern SP zwischengespeichert und zwar mit Hilfe einer Eingabe-Ausgabe-Einrichtung IOP. Ferner hat das Gruppensteuerwerk die Aufgabe, Signale und Steuersignale über diese Leitungen (Teilnehmerleitungen und Verbindungsleitungen, sowie Kanäle) zur Aussendung zu bringen, z.B. Rufwechselstromimpulse, Hörtonsignale, Wahlkennzeichen sowie Leitungszeichen und dergleichen.

Über das einer Anschlussgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) zum zentralen Koppelfeld K hin als auch von diesem abgehend zu einer solchen Leitung durchgeschaltet. Bei einer Verbindungsherstellung erfolgt zunächst eine Durchschaltung z.B. von einer Teilnehmerleitung über die betreffende Anschlussgruppe zum zentralen Koppelfeld K. Die für die weitere Durchschaltung der betreffenden Verbindung über dieses Koppelfeld erforderlichen Daten werden vom Gruppensteuerwerk über die betreffende, bereits erwähnte Datenverbindung zum Zentralsteuerwerk ZW übertragen. Die weitere Verbindungsdurchschaltung erfolgt über eine Anschlussgruppe (gegebenenfalls dieselbe Anschlussgruppe, in der Regel aber eine andere Anschlussgruppe) wozu das betreffende Gruppensteuerwerk der jeweiligen Anschlussgruppe tätig werden muss.

Für ein Gruppensteuerwerk gibt es also hinsichtlich der Verbindungsaufbaurichtung Durchschaltevorgänge verschiedener Art, und zwar einerseits Durchschaltungen von einer Teilnehmerleitung oder Verbindungsleitung (oder einem entsprechenden Kanal) zum Koppelfeld K hin und andererseits Durchschaltungen in umgekehrter Richtung. Die Durchschaltungen über ein Teilkoppelfeld unterscheiden sich ausserdem in solche von und zu Teilnehmerleitungen einerseits und von und zu Verbindungsleitungen (bzw. Kanälen) andererseits. Die im Zusammenhang dieser jeweils beiden pro Verbindung erforderlichen Durchschaltevorgänge durchgeführten Informationsaufnahmevorgänge und/oder Informationsabgabevorgänge nehmen wenigstens je einmal pro Durchschaltevorgang das jeweilige Gruppensteuerwerk in Anspruch. Die jeweilige Art der Durchschaltung (ankommend oder abgehend von oder zu Teilnehmerleitung oder Verbindungsleitung) ist massgebend für die mit der jeweiligen Inanspruchnahme des Gruppensteuerwerks zwangsläufig verbundene Informationsverarbeitungs-Verkehrsbelastung pro Durchschaltevorgang – wie bereits ausgeführt wurde, werden von den Gruppensteuerwerken die Informationen, die sie im Zusammenhang mit einem Durchschaltevorgang aufnehmen, unverändert oder vorverarbeitet an das ihnen gemeinsame zentrale Steuerwerk weitergeleitet. Ebenso gibt auch das zentrale Steuerwerk Informationen an die Gruppensteuerwerke aus, um darin erforderliche abgehende Durchschaltungen durchzuführen und Signale und Steuersignale über die betreffenden Leitungen (Teilnehmerleitungen und Verbindungsleitungen bzw. Kanäle) abzugeben. Die pro Verbindungsherstellung von einem Gruppensteuerwerk an das zentrale Steuerwerk zu übertragenden Informationen stellen also jeweils eine Informationsportion begrenzten Umfanges dar; der jeweilige Umfang einer Informationsportion ergibt sich aus der jeweiligen Art der Verbindungsherstellung.

Jeder Anruf seitens einer Teilnehmerstelle und jede ankommende Belegung einer Verbindungsleitung (bzw. eines entsprechenden Kanales) erfordert also vom betreffenden Gruppensteuerwerk eine bestimmte Arbeitsleistung. Jede solche Arbeitsleistung wird anhand eines Initial-Schaltkennzeichens für das jeweilige Gruppensteuerwerk erkennbar. Ein solches Initial-Schaltkennzeichen ist bei einer Teilnehmerleitung mit Schleifenimpulsgabe z.B. der Schleifenschluss, der das Anrufsignal darstellt. Ein solches Initial-Schaltkennzeichen ist bei einer Verbindungsleitung z.B. das c-Ader-Belegungssignal bei ankommender Belegung. Entsprechendes gilt für verbindungsindividuelle Kanäle. Diese Initial-Schaltkennzeichen sind also voneinander verschieden, und zwar je nach der betreffenden Art von Leitung (Teilnehmerleitung oder Verbindungsleitung). Im Zusammenhang mit der Durchschaltung eines Teilabschnittes einer herzustellenden Verbindung signalisieren sie jeweils ein entsprechendes Mass an für das betreffende Gruppensteuerwerk zu erwartender Informationsverarbeitungs-Verkehrsbelastung, insbesondere in Verbindung mit Aufnahme, Verarbeitung und/oder Abgabe von Informationen. Für die verschiedenen Teilabschnitte durchzuschaltender Verbindungen sind also bestimmte diesbezügliche Masse typisch, die bei gleichartigen Teilabschnitten einer durchzuschaltenden Verbindung gleich, bei den verschiedenen Teilabschnitten aber unterschiedlich sind. Was für jedes der Gruppensteuerwerke gilt, gilt in entsprechender Weise auch für das zentrale Steuerwerk ZW. Je nach dem, ob es sich bei einer über das Koppelfeld K durchzuführenden Durchschaltung um eine Internverbindung, eine abgehende Fernverbindung oder eine ankommende Fernverbindung handelt, ist das Ausmass der Informationsverarbeitungs-Verkehrsbelastung pro Durchschaltung für das zentrale Steuerwerk verschieden gross, und zwar je nach Art der jeweils herzustellenden Verbindung.

Die Beschreibung nimmt nun auch auf die Darstellung gemäss Fig. 2 Bezug. Hierin sind das Gruppensteuerwerk GP1 und GPn und das Zentralsteuerwerk ZW angedeutet, die auch in Fig. 1 dargestellt sind. Dem Gruppensteuerwerk GP1 ist ein Zähler Z zugeordnet. Entsprechendes gilt für die übrigen Gruppensteuerwerke. Jedes Mal, wenn ein Gruppensteuerwerk für eine Informationsaufnahme bei Anruf seitens eines Teilnehmers, der eine Verbindung herzustellen wünscht, in Anspruch genommen wird, oder wenn eine Verbindungsleitung (bzw. ein Kanal) ankommend belegt wird, zwecks Durchschaltung einer Verbindung über das dem Gruppensteuerwerk entsprechende Teilkoppelfeld und das Gruppensteuerwerk für die Aufnahme von Wahlkennzeichen in Anspruch genommen wird, sowie für die Abwicklung der Durchschaltung über das betreffende Teilkoppelfeld oder wenn eine Durchschaltung vom Koppelfeld zu einer abgehenden Verbindungsleitung (bzw. einem Kanal) oder zu einer Teilnehmerleitung hin durchzuführen ist und hierzu entsprechende Informationen vom Zentralsteuerwerk entgegenzunehmen sind, entsteht in dem betreffenden Gruppensteuerwerk ein Initial-Schaltkennzeichen, welches immer ein nachfolgendes Eintreffen einer zu verarbeitenden Information ankündigt.

Ein Gruppensteuerwerk gibt nun immer bei Vorliegen eines solchen Initial-Schaltkennzeichens ein Steuersignal an den ihm zugeordneten Zähler Z ab, und zwar über eine der Steuerleitungen x1, x2 oder x3. Je nach dem, welcher Art die dem Gruppensteuerwerk anschliessend erwachsene Informationsverarbeitungs-Verkehrsbelastung ist, wird das Steuersignal über die Steuerleitung x1 oder die Steuerleitung x2 oder die Steuerleitung x3 vom Gruppensteuerwerk zum Zähler Z gegeben. Mit Hilfe dieser Steuerzeichen wird der Zähler Z um einige Schritte vorwärtsgeschaltet. Die Vorwärtsschaltung und eine Rückwärtsschaltung des Zählers hat jeweils zur Folge, dass eines seiner Zählglieder z1 bis z10 markiert ist. Bei Vorwärtsschaltung des Zählers schreitet die Markierung in aufsteigendem Sinne hinsichtlich der Nummerierung der Bezeichnungen der Zählglieder fort und bei Rückwärtsschaltung schreitet die Markierung in entgegengesetztem Sinne fort. Die Anzahl der Schritte, um die der Zähler Z bei jedesmaligem Erhalt eines Initial-Schaltkennzeichens vorwärtsgeschaltet wird, hängt u.a. ab von dem jeweiligen Mass an für das Gruppensteuerwerk zu erwartender Informationsverarbeitungs-Verkehrsbelastung. Demgemäss trifft das Initial-Schaltkennzeichen jeweils über eine bestimmte der Steuerleitungen x1 bis x3 ein, wodurch die Zahl der Vorwärtsschritte für den Zähler Z mitbestimmt ist. «Mitbestimmt» bedeutet hier, dass die Anzahl der Vorwärtsschritte bei Eintreffen eines Initial-Schaltkennzeichens nicht alleine davon abhängig ist, über welche der Steuerleitungen x1 bis x3 das Initial-Schaltkennzeichen eintrifft. Sondern hierfür ist ausserdem auch noch eine über Wertigkeitsleitungen w1 bis w3 übertragene Wertigkeitsangabe massgebend.

Der Zähler Z eines Gruppensteuerwerkes dient zur Ermittlung der Informationsverarbeitungs-Verkehrsbelastung des jeweiligen Gruppensteuerwerkes, zur Erkennung von Informationsverarbeitungs-Verkehrsüberlastungen und zur Abwehr solcher Überlastungen. Da nun alle Verbindungen nicht nur über ein Teilkoppelfeld sondern immer auch über das zentrale Koppelfeld durchgeschaltet werden, hat jede Inanspruchnahme eines Gruppensteuerwerks auch eine Inanspruchnahme des zentralen Steuerwerks zur Folge. Folglich betrifft die Ermittlung der Informationsverarbeitungs-Verkehrsbelastung jeweils eines Gruppensteuerwerkes, die Erkennung von Informationsverarbeitungs-Verkehrsüberlastungen für dieses Gruppensteuerwerk und die Abwehr solcher Überlastungen von diesem Gruppensteuerwerk zugleich auch die Informationsverarbeitungs-Verkehrsbelastung des zentralen Steuerwerks, Informationsverarbeitungs-Verkehrsüberlastungen für dasselbe und die Abwehr solcher Überlastungen von dem zentralen Steuerwerk. Denn die diesbezügliche Zählereinstellung der Zähler jedes der Gruppensteuerwerke (Abwehr von Überlastungen) wirkt sich auch in der Informations-Verkehrsbelastung des zentralen Steuerwerkes aus und trägt jeweils zur Abwehr solcher Überlastungen vom zentralen Steuerwerk bei. Bekanntlich stellt bei einem Zusammenspiel von Gruppensteuerwerken und einem zentralen Steuerwerk dessen Informationsverarbeitungs-Verkehrsbelastung den typischen Engpass dar; von besonderer Wichtigkeit ist deshalb die Abwehr von Informationsverarbeitungs-Verkehrsüberbelastungen vom zentralen Steuerwerk.

Für die Gruppensteuerwerke und für das zentrale Steuerwerk wurde bisher auch der gemeinsame Begriff «Schaltwerke» benutzt, anschliessend gemeinsam auch als «Steuerwerke» bezeichnet. Die Belastbarkeit eines jeden solchen Steuerwerkes hängt grundsätzlich von seinem Aufbau (Struktur und Programmabwicklung) und von der Art und dem Umfang der ihm laufend übertragenen Informationsverarbeitungsvorgänge ab. Die Erfahrung lehrt nun, dass z.B. die Zusammensetzung von Informationsverarbeitungsvorgängen verschiedener Art sich während des Betriebes eines Steuerwerkes verschieben kann. So kann es z.B. sein, dass zu bestimmten Tageszeiten überwiegend Ortsverbindungen herzustellen sind, während zu bestimmten anderen Tageszeiten überwiegend Fernverbindungen herzustellen sind. Ferner kann es sein, dass zu bestimmten Tageszeiten mehr Kurzzeitgespräche stattfinden und zu anderen Tageszeiten mehr Langzeitgespräche. Ferner kann es sein, dass zu bestimmten Tageszeiten mehr Sonderdienste in Anspruch genommen werden als zu anderen Tageszeiten. Folglich ist die Belastbarkeit eines solchen Steuerwerks nicht konstant. Um ein Steuerwerk optimal auszulasten, ist es deshalb zweckmässig, die zu den verschiedenen Betriebszeiten aufgrund der unterschiedlichen Voraussetzungen gegebenen Belastbarkeiten zu berücksichtigen. Deshalb ist es gebräuchlich, solche Steuerwerke mit Messeinrichtungen zur Bestimmung der Belastbarkeit auszustatten, die die stets schwankende Belastung über Zeiträume integrieren, die jeweils gross genug sind, um ein Bestimmungsergebnis mit ausreichender Ergebnisgenauigkeit zu gewährleisten, also Kurzzeitschwankungen nicht zum Tragen kommen zu lassen. Eine solche Messeinrichtung kann z.B. auf der Basis arbeiten, dass ein jedes Steuerwerk bei jeweiliger Abarbeitung sämtlicher vorliegender Informationsverarbeitungsaufträge ein Anforderungssignal erzeugt, das u.a. dieser Messeinrichtung zugeführt wird. Diese Messeinrichtung zählt nun über bestimmte Zeiträume hinweg, z.B. über eine Sekunde oder 5 Sekunden hinweg die Anzahl solcher aufgetretener Anforderungssignale im betr. Steuerwerk.

In Fig. 2 ist eine pro Gruppensteuerwerk (GP1–GPn) vorgesehene und mit diesem (über m) verbundene solche Messeinrichtung mit M bezeichnet. Sie erhält über eine Messleitung m das Anforderungssignal bei seinem jedesmaligen Auftreten. Die Messeinrichtung zählt in an sich bekannter Weise die Anforderungssignale ab. Von einer zentralen Zeitgebereinrichtung r erhält sie über eine Untersetzereinrichtung U ein Beginnzeichen und ein Endezeichen, also zwei Zeitmarkierungen, die den Messzeitraum markieren. Die Messeinrichtung ermittelt nun die Anzahl der zwischen zwei solchen Zeitmarkierungen eintreffenden Anforderungssignale des jeweiligen Gruppensteuerwerkes. Sie überträgt diese Anzahl an eine Vergleichseinrichtung W, in der ein Konstantwert gespeichert ist, mit dem die Vergleichseinrichtung die Angabe über die Anzahl von Anforderungssignalen vergleicht. Es sei angenommen, dass hinsichtlich der Belastbarkeit drei verschiedene Bestimmungsergebnisse vorgesehen sind. Diese Anzahl ist keineswegs bindend, sondern kann auch grösser gewählt werden. Die Vergleichseinrichtung W gibt also nach Ablauf eines jeden Messzeitintervalls der Messeinrichtung M ein Bestimmungsergebnis bezüglich der Belastbarkeit des Steuerwerkes ab, das den tageszeitlichen Betriebsverhältnissen entspricht.

Eine Belastbarkeitmessung ist für jedes der Gruppensteuerwerke GP1 bis GPn einzeln vorgesehen. Es ist aber ebenso oder auch darüberhinaus möglich, eine solche Belastbarkeitsmessung für das zentrale Steuerwerk vorzusehen. Ferner kann vorgesehen werden, dass eine Belastbarkeitsmessung nur beim zentralen Steuerwerk vorgesehen wird, und dass die dabei gewonnenen Bestimmungsergebnisse in Form der Wertigkeitsangaben von einer dem zentralen Steuerwerk zugeordneten Messeinrichtung an die den Gruppensteuerwerken zugeordneten Zähler Z abgegeben werden.

Das die tageszeitlich bedingte Belastbarkeit des jeweiligen Steuerwerkes betreffende und jeweils in der beschriebenen Weise laufend wiederholt ermittelte Bestimmungsergebnis ist ein dreifaches und besteht demgemäss immer aus drei verschiedenen Wertigkeitsangaben. Jede Wertigkeitsangabe kann – je nach der momentan gegebenen Belastbarkeit des Steuerwerkes (unter «Belastbarkeit» sei hier die Anzahl der pro Messzeitraum von dem betreffenden Steuerwerk abwickelbaren Arbeitsvorgänge, z.B. Rechenoperationen, Steuerungsvorgänge u.dgl., verstanden) – verschiedene Werte annehmen. Für die Übertragung jeder der drei Wertigkeitsangaben sind drei einzelne Wertigkeitsleitungen w1 bis w3 vorgesehen, über die diese Wertigkeitsangaben zu drei Wertigkeitsspeichergliedern v1 bis v3 übertragen werden. Die drei verschiedenen Wertigkeitsangaben pro Belastbarkeitsmessung sind ausserdem den drei erwähnten Steuerleitungen x1 bis x3 individuell zugeordnet, von denen immer eine jeweils ein Initial-Schaltkennzeichen vom Gruppensteuerwerk zum Zähler Z überträgt und dadurch anzeigt, welcher jeweiligen Art und dementsprechend von welchem Umfang die mit dem grade übertragenen Initial-Schaltkennzeichen erwartende und auf das Gruppensteuerwerk zu kommende Arbeitsbelastung zur Verarbeitung der dem Initial-Schaltkennzeichen zugeordneten eintreffenden Informationen ist (s.o.!). In diesem Zusammenhang kann zur Bezeichnung dieser jeweiligen Art von drei verschiedenen Initial-Schaltkennzeichen gesprochen werden, denen die drei Steuerleitungen x1 bis x3 zugeordnet sind. Jedem dieser drei verschiedenen möglichen Initial-Schaltkennzeichen ist je eine der drei Wertigkeitsangaben zugeordnet, von denen der einzelne Wert einer jeden etwas über die Belastbarkeit des betreffenden Steuerwerkes sagt, jeweils unter Bezugnahme auf die mit jedem der eintreffenden Initial-Schaltkennzeichen angezeigte Art und den entsprechenden Umfang von auf das Steuerwerk zu kommender Arbeitsbelastung.

Die drei pro Messzeitraum ermittelten Wertigkeiten geben nun die Anzahl der Zählschritte pro Vorwärtsschaltung des Zählers an, die bei Eintreffen eines Initial-Schaltkennzeichens vom Zähler auszuführen sind. Die Anzahl der Zählschritte, die der Zähler aufgrund eines Initial-Schaltkennzeichens vorwärtsschaltend ausführt, ist also sowohl vom jeweiligen Initial-Schaltkennzeichen als auch vom jeweiligen Bestimmungsergebnis der Belastbarkeitsmessung abhängig.

Die bereits erwähnte Rückwärtsschaltung des Zählers erfolgt in gleichmässigen Zeitabständen. Hierzu wird jedem der Zähler von der zentralen Zeitgebereinrichtung r in gleichmässigen Zeitabständen ein Rückwärtsschaltimpuls zugeführt, bei dem also der Zähler jeweils um einen Schritt rückwärts geschaltet wird.

Es sei nun angenommen, dass dann, wenn der Zähler seinen fünften Zählschritt erreicht, wenn also sein Zählglied z5 markiert ist, Teilnehmeranrufe abgewiesen werden sollen. Das bedeutet also, dass in dieser Betriebssituation Teilnehmer, die an ihrer Teilnehmerstation den Hörer abheben und damit das Anrufsignal abgeben, nicht die Möglichkeit haben sollen, Wählkennzeichen wirksam abzugeben. In einem solchen Betriebszustand ist also das Gruppensteuerwerk dagegen gesperrt, Wählkennzeichen und im Anrufzustand befindlichen Teilnehmerstellen rufender Teilnehmer aufzunehmen und abzuspeichern. In Verbindung hiermit kann vorgesehen sein, dass in diesem Betriebszustand denjenigen Teilnehmerstellen, die sich im Anrufzustand befinden, Besetztsignal ausgesendet wird. Die Markierung des Zählgliedes z5 entspricht also hinsichtlich der Vorwärtszählung und der Rückwärtszählung des Zählers einem Grenzwert; bei dessen Überschreitung durch Vorwärtszählung des Zählers besteht im Zähler ein Überlastkriterium bis zum Wiedererreichen des Grenzwertes durch die einzelnen Schritte der Rückwärtszählung. Dadurch, dass also die Vorwärtszählung aufgrund eines Initial-Schaltkennzeichens einerseits die für das betreffende Gruppensteuerwerk und ebenso für das Zentralsteuerwerk zu erwartende Informationsverarbeitungs-Verkehrsbelastung und andererseits die gegenwärtige Belastbarkeit des zentralen Steuerwerks berücksichtigt, und zwar durch die Anzahl der bei der jeweiligen Vorwärtsschaltung ausgeführten Zählschritte, sowie dadurch, dass die Rückwärtsschaltung des Zählers mit konstanter Geschwindigkeit erfolgt, wird bewerkstelligt, dass eine Aufnahme von Wählkennzeichen durch das Gruppensteuerwerk für einen bestimmten Zeitraum unterbunden ist, der der Verarbeitungszeit der zuletzt aufgenommenen Wählinformationen entspricht. Dieser Zeitraum ist also durch die jeweilige Wertigkeit bestimmt, die für das betreffende Initial-Schaltkennzeichen in dem betreffenden Wertigkeitsspeicherglied (v1, v2 oder v3) gespeichert ist.

In dem Zähler Z findet also eine Kumulation der Initial-Schaltkennzeichen statt. Erreicht der Zähler den Grenzwert, den das Zählglied z5 repräsentiert, so besteht in der Markierung dieses Zählgliedes oder eines zählerwertigen Zählgliedes ein Überlastkriterium. Dieses wird über die Überlastleitung 5 an das Gruppensteuerwerk übertragen. Es wird also zwischen einem zum Erreichen des Grenzwertes führenden Initial-Schaltkennzeichen und einem ersten von ihm zugeordneten Zeichen einer entsprechenden Information, also eintreffenden Wählkennzeichen gebildet und führt dazu, dass diese Zeichen von dem betreffenden Gruppensteuerwerk nicht aufgenommen werden; zugleich kann die Einschaltung des Besetztsignales für den betreffenden Teilnehmer vorgenommen werden, so dass ihm mittels Hörsignal angezeigt wird, dass eine Abgabe von Wählkennzeichen erfolglos bleibt. Die Übertragung des Überlastkriteriums über die Leitung 5 unterbindet also die Aufnahme von Wählkennzeichen von anrufenden Teilnehmern. – Nach einer anderen Version ist vorgesehen, der Übertragung des Überlastkriteriums vom Zähler zum Gruppensteuerwerk die Wirkung zu geben, dass für die Dauer des Bestehens des Überlastkriteriums weitere Initial-Schaltkennzeichen und ihm entsprechende eintreffende Informationen, z.B. Wählkennzeichen nicht angenommen werden, dass aber diejenige Information, deren vorausgehendes Initial-Schaltkennzeichen dazu geführt hat, dass das Überlastkriterium gebildet wurde, noch angenommen wird. In diesem Falle wird also immer dann, wenn ein Initial-Schaltkennzeichen noch angenommen wurde, auch die ihm zugeordnete Information noch angenommen; nur es werden dann weitere Initialschaltkennzeichen und die ihnen zugeordneten Informationen nicht mehr angenommen.

Wie der Zeichnung Fig. 2 zu entnehmen ist, ist auch noch eine weitere Überlastleitung 7 vorgesehen. Ein Überlastkriterium wird über diese Überlastleitung nur übertragen, wenn der Zähler einen entsprechend höheren Zählerstand erreicht. Entsprechendes gilt für die Überlastleitung 10. Es sei nun angenommen, dass ein über die Überlastleitung 5 übertragenes Überlastkriterium dazu dient, das Gruppensteuerwerk zu veranlassen, von anrufenden Teilnehmern keine Wahlkennzeichen anzunehmen, und ein über die Überlastleitung 7 übertragenes Überlastkriterium dazu dient, auch über ankommend belegte Verbindungsleitungen eintreffende Wahlkennzeichen nicht mehr anzunehmen. Da der Zählerstand des Zählers die augenblickliche Belastung des Gruppensteuerwerks anzeigt, wird bei einem dem Zählglied z5 entsprechenden Belastungsgrad die Annahme von Wählkennzeichen von anrufenden Teilnehmern gesperrt, dagegen die Annahme von Wählkennzeichen von ankommend belegten Verbindungsleitungen erst bei einem höheren Belastungszustand. Bei einem noch höheren Belastungszustand kann auch die Annahme von Informationen verhindert werden, die das Gruppensteuerwerk vom Zentralsteuerwerk entgegennehmen soll.

Es ist also festzustellen, dass die Ermittlung der Verkehrsbelastung und die Erkennung von Überbelastungs-Situationen in den Gruppensteuerwerken mittels in oder bei ihm vorgesehenen und die Fälle der Inanspruchnahme des Gruppensteuerwerks erfassenden Zählers erfolgt; die Ermittlung der Verkehrsbelastung und die Erkennung von Überbelastungen erfolgt also an dezentraler Stelle. Zur Abwehr von Informationsüberbelastungen bewirkt das von dem Zähler erzeugte Überlastkriterium über die Überlastleitungen 5 und 7, dass die Inanspruchnahme des Gruppensteuerwerks zwecks Aufnahme von Informationen für diejenigen Durchschaltungen über das Teilkoppelfeld der betreffenden Anschlussgruppe verhindert ist, die solche der ankommenden Art sind. Durchschaltungen vom Koppelfeld K zu einer Verbindungsleitung oder zu einer Teilnehmerleitung können dagegen noch abgewickelt werden, obwohl über die Überlastleitungen 5 und 7 das Überlastkriterium bereits ansteht. Erst wenn das Überlastkriterium auch über die Überlastleitung 10 zum Gruppensteuerwerk übertragen wird, werden auch Durchschaltungen der abgehenden Art nicht mehr ausgeführt, indem bei Erreichen eines solchen Betriebszustandes das betreffende Gruppensteuerwerk gegen die Aufnahme entsprechender Informationen gesperrt ist. Die Überlastleitung 10 dient also zur Übertragung eines Überlastblockierkriteriums – durch dasselbe wird nicht nur eine Annahme von Informationen vom Zentralsteuerwerk verhindert, sondern es kann darüber hinaus vorgesehen sein, dass auch eine Abgabe von Informationen an das betreffende Gurppensteuerwerk verhindert ist, insbesondere die Abwicklung von Durchschaltevorgängen innerhalb einer Anschlussgruppe.

Es sei auch noch betont, dass die Ermittlung der Verkehrsbelastung und die Erkennung von Überbelastungs-Situationen in den Gruppensteuerwerken, also in teilzentralen Schalteinrichtungen erfolgt. Den darin vorgesehenen an sich bekannten Zählern werden nicht Überlastsignale zugeführt, sondern Initial-Schaltkennzeichen, die die Vorwärtsschaltung der Zähler entsprechend der jeweiligen Wertigkeit bewerkstelligen. Die Überlastsignale werden also nicht den Zählern zugeführt, sondern von ihnen erzeugt. Die die Verkehrsbelastung betreffenden Steuersignale, die den Zählern zugeführt werden, sind also nicht Überlastsignale, sondern solche Steuersignale, die den Beginn jeweils einer in einem teilzentralen Gruppensteuerwerk empfangenen, in ihm zwischenzuspeichernden und an das zentrale Steuerwerk wieder abzugebenden Informationsportion darstellen. Wie bereits erläutert, sind diese Steuersignale Initial-Schaltkennzeichen. Diese Steuersignale können aber auch auf andere Weise gewonnen werden, und zwar aufgrund des Eintreffens eines ersten Wählkennzeichens einer Serie von Wählkennzeichen.

Die Anwendung der Erfindung ist nicht auf PCM-Fernsprechvermittlungsanlagen beschränkt, sondern kann auch in Fernmeldevermittlungsanlagen in Analogtechnik realisiert werden. Insbesondere in diesem Zusammenhang ist die Möglichkeit gegeben, dass ein Überlastsignal an diejenige verbindungsindividuelle Schalteinrichtung abgegeben wird, über die ein Initial-Schaltkennzeichen eingetroffen ist, welches zum Erreichen des Grenzwerts geführt hat. Das Überlastsignal bewirkt dann, dass die aus Intitial-Schaltkennzeichen und Informations-Zeichen bestehenden, zu verarbeitenden Informationen, die in verbindungsindividuellen Schalteinrichtungen eintreffen, von hier nicht weitergegeben werden. Ebensogut ist es auch möglich, ein Überlastsignal in Zuordnung zu einer verbindungsindividuellen Schalteinrichtung an zentraler Stelle zu speichern und auf diese Weise zu bewirken, dass in der betreffenden verbindungsindividuellen Schalt-eintreffende Informationen nicht angenommen werden.

Ferner besteht die Möglichkeit, dass über eine verbindungsindividuelle Schalteinrichtung, an die ein Übersignal abgegeben wurde, oder für die ein Überlastsignal gespeichert wurde, ein Zeichen, insbesondere ein Hörzeichen ausgesendet wird, welches anzeigt, dass über die betreffende verbindungsindividuelle Schalteinrichtung Informationszeichen nicht empfangen werden. Hierbei handelt es sich vornehmlich um das Besetztzeichen.

Im Gegensatz zu bekannten Anordnungen erfolgt also die Ermittlung der für das zentrale Steuerwerk erwachsenden Informations-Verkehrsbelastung an dezentraler Stelle, und zwar nicht an einer einzigen dezentralen Stelle sondern in allen Gruppensteuerwerken. Hierzu werden die durch die DE-A 3 236 130 an sich bekannten Zähler verwendet. Im Gegensatz zu der darin beschriebenen Technik erfolgt die Ermittlung der Informations-Verkehrsbelastung und die Bildung von Überlastsignalen aber nicht auf andere Weise an zentraler Stelle, und es werden nicht die Überlastsignale von der zentralen Stelle zu den dezentralen Stellen hin übertragen, sondern den Zählern werden Initial-Schaltkennzeichen zugeführt, und die Überlastsignale werden von ihnen erzeugt, statt dass sie ihnen zugeführt werden. Dadurch, dass den Zählern Initial-Schaltkennzeichen zugeführt werden, und zwar an dezentraler Stelle, wird ein Zeitgewinn erzielt, der durch eine entsprechend frühzeitige Überlastabwehr möglich ist. Der Überlastfall für ein zentrales Steuerwerk ist also gleichsam vorhersehbar und es können so frühzeitig Abwehrmassnahmen getroffen werden, dass von vornherein verhindert werden kann, dass der Überlastfall überhaupt eintritt. Für diesen Zeitgewinn wird u.a. der zeitliche Abstand zwischen Initial-Schaltkennzeichen, die den Zählern zugeführt werden, und den den Initial-Schaltkennzeichen individuell zugeordneter Informationen (z.B. eintreffende Wählkennzeichen), die in ihrer Gesamtheit ursächlich sind für die auf das zentrale Steuerwerk zu kommende Informations-Verkehrsbelastung, mitausgenutzt. Ein bestehendes Überlastkriterium führt auch nicht zu einer allgemeinen Zufuhrsperre von Informationen für das zentrale Steuerwerk, sondern führt zur Abwehr einzelner Belegungen, z.B. durch Teilnehmeranruf verursachte Belegungen, die zufallsbedingt über das gesamte Verkehrsgeschehen verteilt sind. Es wird dadurch möglich, die Überlastabwehr sehr präzise zu gestalten und alsbald nach Abarbeitung einer aufgetretenen Verkehrs-Überlastung die vorübergehend getroffenen Abwehrmassnahmen wieder unwirksam zu machen. Durch die Massnahme, dass die Überlastabwehrmassnahmen sich nicht gleichmässig auf alle Fälle der Inanspruchnahme der Gruppensteuerwerke auswirken, sondern in der beschriebenen Weise diese Fälle bezüglich ankommender Durchschaltungen und abgehender Durchschaltungen über ein einem Gruppensteuer-Gruppensteuerwerk entsrpechendes Teilkoppelfeld unterscheiden, wird erreicht, dass erstens die Überlastabwehrtmassnahmen sehr wirksam sind hinsichtlich der Begrenzung der Informationsverarbeitungs-Verkehrsbelastung, und dass zweitens vermieden wird, dass bereits geleisteter Arbeitsaufwand seitens einer teilzentralen Schalteinrichtung und seitens des zentralen Steuerwerks nachher wieder verworfen werden kann, und zwar wegen Abweisung einer Anforderung einer teilzentralen Gruppensteuerung zur Abwicklung einer abgehenden Durchschaltung, also für einen Verbindungsaufbau, für den bereits Informationsverarbeitung seitens des Gruppensteuerwerkes und seitens des zentralen Steuerwerks geleistet worden ist.

Sehr wesentlich ist in den erläuterten Zusammenhängen die Verwendung der durch die genannte DE-A 3 236 130 bekannten Zähler in einem neuen technischen Zusammenhang. Dadurch, dass diesen Zählern Informationen zugeführt werden, die den jeweiligen Umfang eines Vorwärtsschaltevorganges dieser Zähler nach Massgabe einer Wertigkeit beeinflussen, die sich sowohl aus der Art der jeweils auf das Gruppensteuerwerk und auf das zentrale Steuerwerk zukommenden Informationsverarbeitungsaufgabe, als auch aus Ergebnissen der tageszeitlich bedingten Informationsverarbeitungs-Belastbarkeit des zentralen Steuerwerks ergeben, wird erreicht, dass die auf das zentrale Steuerwerk zu kommende Verkehrsbelastung hochgradig optimal angepasst ist an die Leistungsfähigkeit des zentralen Steuerwerkes. Durch Verwendung der an sich bekannten Zähler an dezentraler Stelle steht das jeweilige Mass der momentanen Verkehrsbelastung pro Gruppensteuerwerk immer sofort zur Verfügung. Es ist nicht – wie bekannt – erforderlich, dass jeweils über einen Ermittlungszeitraum hin die eintreffenden Belegungen gezählt werden, wodurch jeweils erst nach Ablauf eines solchen Ermittlungszeitraumes die während desselben aufgetretene Verkehrsbelastung greifbar werden würde, wodurch ein Ergebnis einer solchen Verkehrsbelastungsermittlung immer erst nach einer mittleren Verzugszeit verfügbar wäre, die der Hälfte des Ermittlungszeitraumes entspricht. Diese bekannte Methode der Zählung in aufeinanderfolgenden Ermittlungszeiträumen macht es zudem erforderlich, dass die Ermittlungszeiträume jeweils gross genug gewählt werden müssen im Hinblick auf Zahl und Verteilung der zu zählenden Ereignisse, was bei Anwendung einer solchen bekannten Zählmethode an dezentraler anstatt zentraler Stelle dazu führen würde, dass die Ermittlungszeiträume noch entsprechend grösser bemessen werden müssten. Diese Nachteile aber werden durch das beschriebene Ausführungsbeispiel auch vermieden.

Es kann also vorgesehen sein, dass das in einem Erreichen eines bestimmten Zählerstandswertes bestehende Überlastkriterium dazu führt, dass mit seinem Entstehen zwischen einem Initial-Schaltkennzeichen und den ihm zugehörigen eintreffenden Wahlinformationen eine Aufnahme der letzteren verhindert wird, oder dass diese noch aufgenommen werden, dagegen aber eine Aufnahme eines weiteren Initial-Schaltkennzeichens samt den zugehörigen Wahlinformationen verhindert wird. Beide Varianten sind realisierbar sowohl für den Fall, dass das Überlastkriterium im und vom Gruppensteuerwerk selbst verarbeitet wird, als auch für den Fall, dass es an eine verbindungsindividuelle Schalteinrichtung (z.B. Verbindungssatz) abgegeben wird. Das Überlastkriterium kann darin bestehen, dass ein bestimmtes Zählglied des Zählers Z markiert ist und ein entsprechendes Überlastsignal über eine der Leitungen 5, 7 oder 10 übertragen wird. Ebensogut ist es aber auch möglich, dass das Überlastkriterium dadurch entsteht, dass im umgekehrten Sinne eine entsprechende Zählglied-Markierung gelöscht wird, und dass dadurch eine Annahme weiterer Initial-Schaltkennzeichen bzw. Wahlkennzeichen verhindert ist.

**Patentansprüche**

1. Schaltungsanordnung für Fernmeldeanlagen, insbesondere Fernsprechvermittlungsanlagen, mit zentralen und/oder teilzentralen informationsverarbeitenden Schaltwerken (ZW, GP1, ... GPn) mit einer hinsichtlich der Informations-Verarbeitungskapazität begrenzten Leistungsfähigkeit, und mit Messeinrichtungen (M) zur Bestimmung der Belastbarkeit solcher Schaltwerke (ZW, GP1, ... GPn) die die stets schwankende Belastung über Zeiträume integrieren, die jeweils gross genug sind, um ein Bestimmungsergebnis mit ausreichender Ergebnisgenauigkeit zu gewährleisten, und mit Zählern (Z) zur Ermittlung der Informationsverarbeitungs-Verkehrsbelastung jeweils eines Schaltwerkes (ZW, GP1, ... GPN), zur Erkennung von Informationsverarbeitungs-Verkehrsüberlastungen und zur Abwehr solcher Überlastungen, wobei diese Zähler (Z) mit möglichst geringem Zeitverzug einen jeweils aktuellen Momentanwert der Informations-Verkehrsbelastung liefern, um die Abwehr von Überlastungen verzögerungsarm zu realisieren, dadurch gekennzeichnet, dass von den von einer Messeinrichtung (M) laufend abgegebenen und wenigstens einem Zähler (Z) zugeführten Bestimmungsergebnissen jeweils das letzte in einem Speicher (v1–v3) des betreffenden Zählers (Z) gespeichert ist, dass dieser bei Eintreffen jeweils eines ein nachfolgendes Eintreffen einer zu verarbeitenden Information ankündigenden Initial-Schaltkennzeichens vorwärtsgeschaltet und in regelmässigen Zeitabständen rückwärtsgeschaltet wird, und dass das jeweils gespeicherte Bestimmungsergebnis angibt, um wieviele Schritte der Zähler bei Erhalt eines jeden Initial-Schaltkennzeichens vorwärtsgeschaltet wird, und dass in dem Zähler (Z) von einer Überschreitung eines Grenzwertes durch Vorwärtszählung bis zum Wiedererreichen des Grenzwertes durch Rückwärtszählung ein Überlastkriterium (z5, z7, z9) besteht.

2. Schaltungsanordnung nach Anspruch 1, dadurch gekennzeichnet, dass jede Information aus einem Initial-Schaltkennzeichen und nachfolgenden und durch dasselbe angekündigten Informationszeichen besteht, und dass von dem Zähler (Z) Initial-Schaltkennzeichen erfasst werden, und dass der Zähler (Z) in regelmässigen Zeitabständen wieder rückwärts geschaltet wird, und dass nach einer durch ein Initial-Schaltkennzeichen verursachten Überschreitung der der Belastungsgrenze entsprechenden Zählerstellung die diesem Initial-Schaltkennzeichen zugeordneten Informationszeichen noch angenommen werden, aber die Annahme eines vor Rückwärtsschaltung des Zählers (Z) unter die der Belastungsgrenze entsprechende Zählerstellung eintreffenden Initial-Schaltkennzeichens samt den ihm zugeordneten Informationszeichen verhindert ist.

**Claims**

1. A circuit arrangement for telecommunications systems, in particular telephone exchange systems, comprising central and/or sub-central information-processing switching units (ZW, GP1, ... GPn) which have a limited information processing capacity, and comprising measuring devices (M) which determine the load capacity of such switching units (ZW, GP1, ... GPn) and which integrate the constantly fluctuating load over periods of time which are sufficient in length to ensure a sufficiently accurate determination results, and comprising counters (Z) which determine the information processing traffic load of each switching unit (ZW, GP1, ... GPN), which recognise information processing traffic overloads and which avert such overloads, where these counters (Z) in each case supply an up-to-date instantaneous value of the information traffic load with the shortest possible time delay in order to avert overloads with the minimum of delay, characterised in that of the determination results which are continuously emitted by a measuring device (M) and which are fed to at least one counter (Z), the last result is in each case stored in a store (v1–v3) of the counter (Z) in question, that on the arrival of each initial switching characteristic which announces the subsequent arrival of an item of information which is to be processed, the counter is stepped on and is stepped back at regular intervals of time, and that each stored determination result indicates the number of steps by which the counter is stepped on when each initial switching characteristic is received, and that an overload criterion ($z5, z7, z9$) occurs in the counter ($Z$) from the time at which a limit value is exceeded as a result of the stepping on of the counter until the time at which the limit value is again reached as a result of the stepping back of the counter.

2. A circuit arrangement as claimed in claim 1, characterised in that each item of information comprises an initial switching characteristic and following information characters which are announced by said initial switching characteristic, and that initial switching characteristics are detected by the counter ($Z$), and that the counter ($Z$) is stepped back at regular intervals of time, and that when the counter position corresponding to the load limit has been exceeded as a result of an initial switching characteristic, the information characters assigned to this initial switching characteristic continue to be accepted although the acceptance is prevented of an initial switching characteristic, together with the information characters assigned thereto, which arrives before the counter ($Z$) has been stepped back below the counter position corresponding to the load limit.

### Revendications

1. Montage pour des installations de télécommunications, notamment des installations de téléphonie, comportant des unités centrales et/ou partiellement centrales de commutation ($ZW$, $GP1$, ..., $GPn$) traitant les informations et possédant des capacités potentielles limitées du point de vue de la capacité de traitement d'informations, et comportant des dispositifs de mesure ($M$) servant à déterminer la capacité de charge de telles unités de commutation ($ZW$, $GP1$, ..., $GPn$), qui intègrent les charges en permanence variables, pendant des intervalles de temps qui sont suffisamment importants pour garantir un résultat de détermination avec une précision de résultat suffisante, et comportant des compteurs ($Z$) servant à déterminer la charge en trafic du traitement d'informations d'une unité respective de commutation ($ZW,GP1$, ... $GPn$), pour identifier des surcharges du trafic de traitement d'informations et pour combattre de telles surcharges, ces compteurs ($Z$) délivrant, avec un retard aussi faible que possible, une valeur actuelle instantanée de la charge du trafic d'informations, afin de combattre les surcharges avec un retard réduit, caractérisé par le fait que parmi les résultats de détermination délivrés de façon continue par un dispositif de mesure ($M$) et envoyés au moins à un capteur ($Z$), respectivement le dernier résultat est mémorisé dans une mémoire ($v1$–$v3$) du compteur considéré ($Z$), que ce compteur effectue un comptage progressif lors de l'apparition d'un indicatif initial de commutation annonçant une arrivée ultérieure d'une information à traiter, et un compotage rétrograde pendant des intervalles de temps uniformes, et que le résultat de détermination respectivement mémorisé indique sur combien de pas le compteur a avancé lors de la réception de chaque indicatif initial de commutation, et qu'un critère de surcharge ($z5, z7, z9$) est présent dans le compteur ($Z$) depuis un dépassement d'une valeur limite par comptage progressif jusqu'à la nouvelle obtention de la valeur limite par comptage régressif.

2. Montage suivant la revendication 1, caractérisé par le fait que chaque information est constituée par un indicatif initial de commutation et par des signaux d'information ultérieurs, annoncés par cet indicatif, et que le compteur ($Z$) détecte des indicatifs initiaux de commutation, et que le compteur ($Z$) effectue à nouveau un comptage rétrograde pendant des intervalles de temps uniformes, et qu'après un dépassement, provoqué par un indicatif initial de commutation, de l'état de comptage correspondant à la limite de charge, les signaux d'information associés à cet indicatif initial de commutation sont encore acceptés, tandis que l'acceptation d'un indicatif initial de commutation, apparaissant avant la marche rétrograde du compteur ($Z$) au-dessous de l'état de comptage correspondant à la limite de charge, ainsi que des signaux d'information, qui lui sont associés, est empêchée.

0 121 236

# FIG 1

13

# FIG 2